# EUROPEAN PATENT APPLICATION

(11) **EP 1 288 932 A2**
(43) Date of publication of application: **05.03.2003**
(21) Application number: 02017816.6
(22) Date of filing: 07.08.2002
(51) Int. Cl.: G11B 7/26

(54) **Method of making multi-layer optical recording medium**

(30) Priority: 31.08.2001 JP 2001263816
(71) Applicant: Pioneer Corporation, Meguro-ku, Tokyo (JP)
(72) Inventor: Mitsuhata, Takanori, deceased (JP)
(74) Representative: Goddar, Heinz J., Dr.

(57) **Abstract**

A multi-layer optical recording medium includes a light transmissive intermediate layer. This intermediate layer is formed by at least two times of laminating steps. The recording medium has smaller bending, and the intermediate layer has uniform thickness.

## Description

### BACKGROUND OF THE INVENTION

### 1. Field of the Invention

The present invention relates to a method of manufacturing an optical recording medium having a plurality of information recording layers. The optical recording medium may be a rewritable type, write once type or playback only type.

### 2. Description of the Related Art

An optical disc having a plurality of recording layers (sometimes referred to as "multi-layer optical disc") is an example of information recording media. Since such optical disc has a plurality of recording layers, it can record information in a large quantity. The multi-layer optical disc may be a playback only type, a write once type or a rewritable type, and has a wide variety of applications. Accordingly, the multi-layer optical disc draws attention as useful recording medium. In recent times, DVD (digital versatile disc) having two optical recording layers is widely utilized.

The multi-layer optical recording medium has a plurality of recording layers and can record information at high density so that appropriate focusing of a laser beam on the respective recording layers is required when writing information on the recording medium, retrieving (playing back) the information and erasing (deleting) the information. To this end, it is ideal that the recording medium has certain characteristics such as substantially no bending, and substantially no irregularity in thickness. The two-layer optical recording medium, which has the simplest structure among the multi-layer optical recording media, includes a substrate, a first optical recording layer on the substrate, a light transmissive layer (intermediate layer) on the first substrate, and a second optical recording layer on the intermediate layer. A protection layer is generally provided on the second optical recording layer.

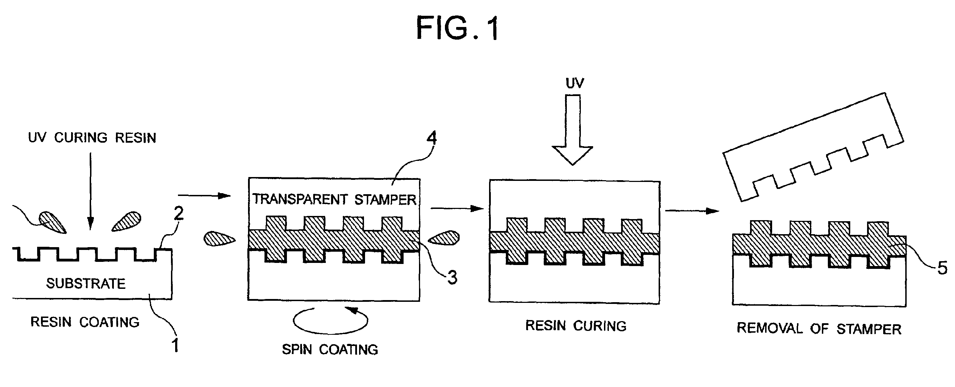

A method of manufacturing the two-layer optical recording medium includes a step of preparing the substrate, a step of making the first recording layer, a step of making the light transmissive intermediate layer, a step of making the second recording layer, and a step of making the protection layer. Referring to Figure 1 of the accompanying drawings, the step of making the light transmissive intermediate layer will be described. First, an ultraviolet ray (UV) curing resin 3 is applied on a first recording layer 2 formed on a concavo-convex substrate 1. Then, a transparent stamper 4, which is a master disc for transcription, is placed over the resin 3, and the substrate 1 is rotated at high speed such that the resin 3 spreads uniformly and entirely between the stamper 4 and the first recording layer 2 (spin lamination or coating). Subsequently, ultraviolet ray is radiated from the transparent stamper side to cure the resin 3. At last, the stamper 4 is removed. In this manner, the light transmissive intermediate layer 5 is created.

In practice, however, it is difficult to have uniform hardness and desired shape in the thickness direction of the light transmissive intermediate layer 3. As a result, the product (recording medium) has some bending and irregularities in the thickness direction.

### SUMMARY OF THE INVENTION

An object of the present invention is to provide a method of making a recording medium having a light transmissive intermediate layer, which has less bending and irregularities in a thickness direction of the recording medium.

According to one aspect of the present invention, there is provided a method of making a recording medium having a substrate, a first recording layer located on the substrate, and at least one second recording layer stacked on the first recording layer, a light transmissive intermediate layer being interposed between the first and second recording layers when the first recording layer lying below the second recording layer and interposed between two adjacent second recording layers when one second recording layer lying below another second recording layer, the method comprising the steps of A) forming the first recording layer on the substrate, B) forming the intermediate layer on the first recording layer by a plurality of laminating operations, and C) forming the second recording layer on the intermediate layer. The method may further include the steps of D) forming another intermediate layer on the second recording layer by a plurality of laminating operations, E) forming another second recording layer on the another intermediate layer formed in Step D, and F) repeating Steps D and E until a desired number of second recording layers are formed.

Since the light transmissive intermediate layer of the multi-layer optical recording medium is formed by a plurality of laminating steps (at least two times of lamination), the intermediate layer has uniform thickness and it is possible to reduce the bending of the recording medium.

### BRIEF DESCRIPTION OF THE DRAWINGS

Figure 1 illustrates a process of making a light transmissive intermediate layer according to a prior art method;
Figure 2 illustrates a cross sectional view of a multi-layer optical recording medium, which has two recording layers, according to one embodiment of the present invention;
Figure 3 illustrates an enlarged cross sectional view of an intermediate layer of the recording medium shown in Figure 2;
Figure 4A illustrates a flowchart of a method of fabricating the recording medium shown in Figure 2;
Figure 4B is a detailed flowchart of an intermediate layer making step mentioned in the flowchart of Figure 4A;
Figure 4C is similar to Figure 4B and shows an alternative flowchart of the intermediate layer making step;
Figure 4D illustrates a flowchart of a method of fabricating a recording medium having three or more recording layers;
Figure 5A is a graph showing a change in bending angle of each of two recording media (one made by a conventional method and the other made by an invention method) in the radial direction of the recording medium;
Figure 5B is similar to Figure 5A and shows a change in bending angle of the two recording media in the tangential direction of the recording medium;
Figure 6A is a graph showing thickness of an intermediate layer of the recording medium made by the conventional method; and
Figure 6B is a graph showing thickness of an intermediate layer of the recording medium made by the invention method.

### DETAILED DESCRIPTION OF THE INVENTION

Embodiments of the present invention will be described in reference to the accompanying drawings.

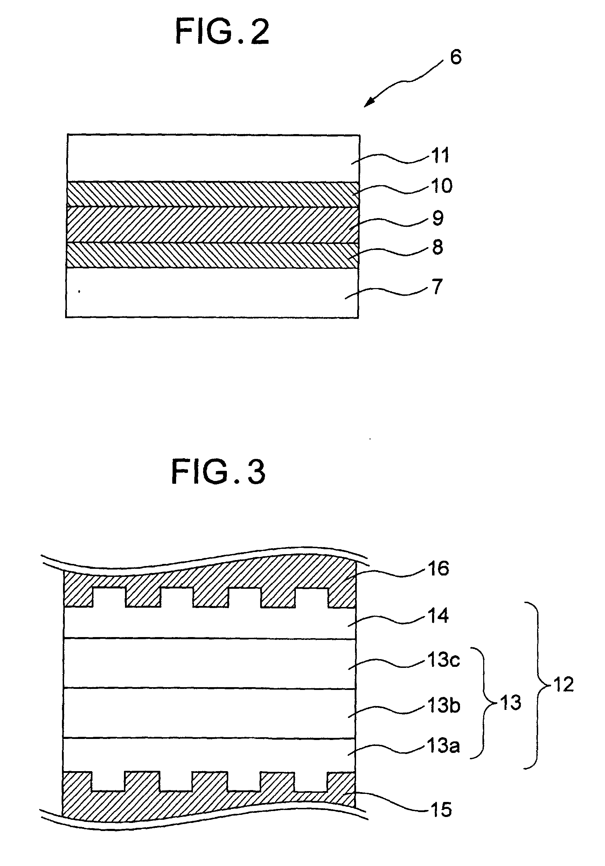

Referring to Figure 2, a two-layer optical recording medium 6, which is the simplest recording medium among multi-layer optical recording media according to the present invention, is illustrated. The two-layer optical recording medium 6 includes, in the laminating order, a substrate 7, a first optical recording layer 8, a light transmissive intermediate layer 9, a second optical recording layer 10 and a protection layer 11.

The substrate 7 has thickness of about 0.1 to 1.2 mm and is made from a transparent material such as glass and resin (e.g., polycarbonate (PC), polymethyl methacrylate (PMMA) and polyolefin). It should be noted that the material of the substrate 7 may be a non-transparent material. It should also be noted that a metal may used as the substrate material. In general, the substrate 7 has guide grooves for recordation and/or pit patterns. It should be noted that the substrate 7 may not have any guide grooves or pit patterns.

The first optical recording layer 8 is an optical recording layer directly formed on the substrate 7. The first optical recording layer 8 may be a phase change-type recording layer, which is made from GeInSbTe, AgInSbTe or GeSbTe. Alternatively, the first optical recording layer 8 may be a once write type recording layer, which is made from an organic dye (e.g., cyanin and phthalocyanine) or an alloy including a metal having a low-melting point (e.g., Te, Bi, Se and Sn). Alternatively, the first optical recording layer 8 may be a playback only type recording layer or a reflective layer which is made from Au alloy, Al alloy or Ag alloy.

The light transmissive intermediate layer 9 is a transparent layer having thickness of about 5 to 50 microns and made from the UV curing resin. The intermediate layer 9 is depicted in Figure 3 in a larger scale, and designated at another reference numeral 12. The intermediate layer 12 includes three layers (bed or underneath layers) 13a to 13c laminated on the first recording layer 15 and a transcription layer 14. The transcription layer 14 is an uppermost layer of the intermediate layer 12 and has a surface which is made by a stamper 5 (Figure 1). This surface is transcription of the mating surface of the second recording layer 16. The transcription layer 14 is most distal from the first recording layer 15 (designated at 8 in Figure 2). When the intermediate layer 12 is formed having a predetermined thickness, the bed layers 13a to 13c and the transcription layer 14 can have arbitrary thickness respectively as long as the sum of the layers 13a to 13c and 14 has the predetermined value. For example, when the intermediate layer 12 has to have thickness of 20 microns, each of the bed layers 13a to 13c and the transcription layer 14 may be set to 5 microns. The material for the intermediate layer 9 is not limited to the UV curing resin. For instance, it is possible to use an arbitrary resin if the resin has transmissivity of 80% or more at a laser wavelength utilized to the ultimate recording medium. The bed layers 13a to 13c may be collectively called "bed layer 13".

It should be noted that the bed layer 13 below the transcription layer 14 does not have to include three layers. The bed layer may include a single or more layers (except for three). It should also be noted that all of the bed layer(s) and transcription layer are not necessarily made from the same resin. For example, the bed layer(s) may be made from a resin different from the transcription layer. It should also be noted that the recordation guide grooves and/or pit patterns may not be provided on the transcription layer, i.e., the transcription layer may be planar.

The second optical recording layer 10 is directly formed on the intermediate layer 9. Like the first optical recording layer 8, the second optical recording layer 10 may be a phase change-type recording layer, a once write type recording layer, or a playback only type. The first optical recording layer 8 and second optical recording layer 10 may be the same type or different types. When the first optical recording layer 8 is a phase change type and the second optical recording layer 10 is a playback only type, the recording medium 6 is called a "hybrid" type.

The protection layer 11 is a light transmissive layer having a thickness of about 30 to 300 microns, and has light transmissivity of 80% or more at a laser wavelength utilized for the ultimate recording medium. The protection layer 11 is made from a resin such as UV curing resin.

The two-layer optical recording medium has the above described structure. It is possible to radiate the laser beam to the recording medium 6 from the substrate 7 side or the protection layer 11 side, or from both of the substrate and protection layer sides. It should be noted that the recording medium 6 may have more than two recording layers . For instance, a third optical recording layer may be formed on the second optical recording layer via a light transmissive intermediate layer.

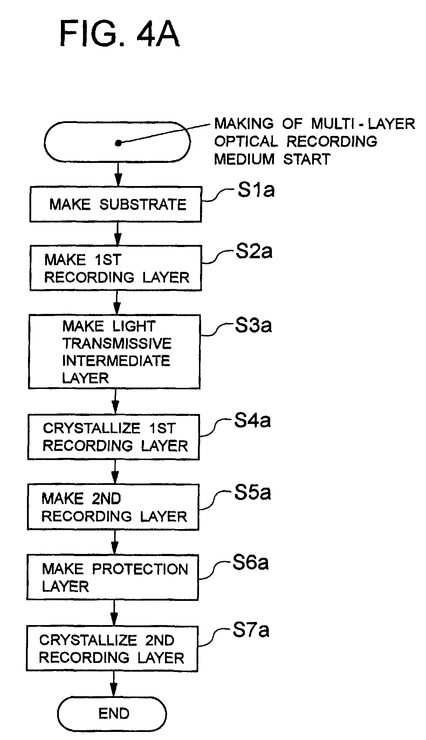

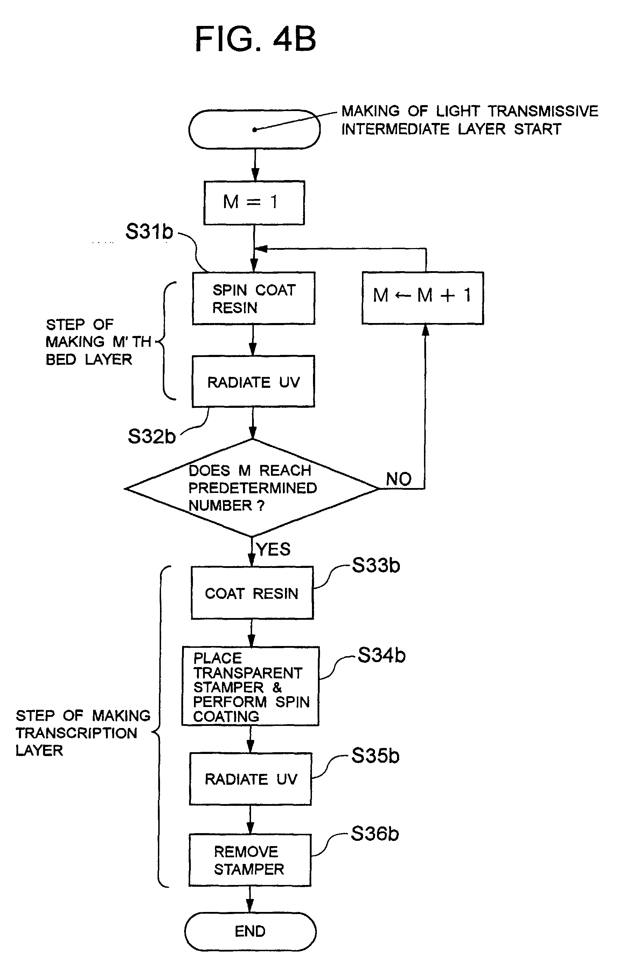

Now, a method of fabricating the two-layer optical recording medium 6 will be described in reference to Figures 4A and 4B. The substrate 7 is fabricated by injection molding or the like at Step S1a. The substrate 7 has predetermined pit patterns formed thereon. The first optical recording layer 8 is then formed on the substrate 7 at Step S2a. The first optical recording layer 8 is formed by physical vapor deposition (PVD) such as sputtering and ion-plating, or chemical vapor deposition (CVD) such as plasma CVD. The physical vapor deposition and chemical vapor deposition are examples of film making methods (coating methods). Alternatively, the first optical recording layer 8 may be formed by spin coating. After Step S2a, the light transmissive intermediate layer 9 is formed (Step S3a).

The step of making the light transmissive intermediate layer 9 (12) will be described in detail in reference to the flowchart of Figure 4B. First, the first bed layer (resin layer) 13a is formed on the first optical recording layer 8 by the resin spin coating (S31b). Subsequently, UV is radiated on the first bed layer 13a (S32b) . Steps S31b and S32b define a step of making the bed layer 13a. It is necessary not to cure the layer surface completely when UV is radiated. This is because application of a next resin layer (the second bed layer 13b) becomes difficult when the bed layer surface is completely cured. How hard (or soft) the bed layer 13a is cured is determined (adjusted) in accordance with intensity and period of the UV radiation and other factors. Another reason is because the resin of the bed layer 13a is generally anaerobic. This makes it possible to avoid complete curing.

The thickness of the bed layer 13a is decided by, for example, an amount of resin application (coating) and rotational speed of the substrate 7 during the spin coating process. The bed layer making step is repeated until a desired number of bed layers are formed. For example, when the bed layer portion 13 includes three layers 13a to 13c as shown in Figure 3, the step of making the bed layer is repeated three times. Different resins may be used for the three bed layers 13a to 13c. After making the three bed layers 13a to 13c, another resin coating process is performed to form the transcription layer 14 (Step S33b). The transparent stamper 4, which is a master disc or board for the pit patterns, is placed over the transcription layer resin, and the substrate 1 is rotated at high speed for spin coating at Step S34b. The transcription layer 14 is formed having a desired thickness by adjusting an amount of resin coating, selecting viscosity of the resin, spinning speed and other factors during the spin coating. After the spin coating, UV is radiated for curing the transcription layer resin (Step S35b) and the transparent stamper 4 is removed (Step S36b) to complete the formation of the transcription layer 14. In order to facilitate the removal of the stamper 4, the resin of the transcription layer 14 is preferably becomes non-adhesive, after the curing, to the transparent stamper 4.

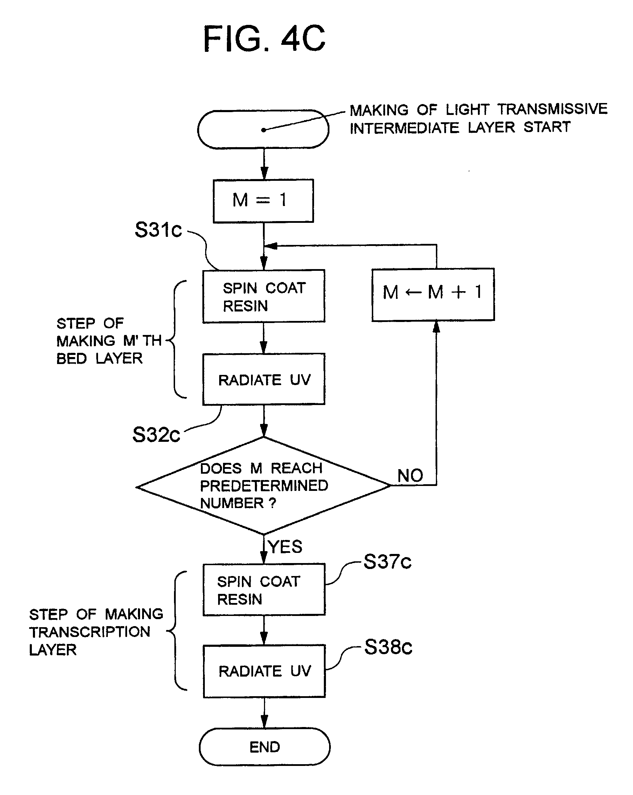

It should be noted that the pit patterns may not be formed on the transcription layer 14. For example, the transparent stamper 4 having no pit patterns may be used. Alternatively the transparent stamper 4 may not be utilized during the step of making the transcription layer 14, as shown in Figure 4C. In Figure 4C, the resin spin coating (Step S37c) and UV radiation (Step S38c) are successively performed.

After the light transmissive intermediate layer 9 is created (Step S3a; Figure 4A), the first recording layer 8 is crystallized (Step S4a). It should be noted that the crystallization step (Step S4a) is performed when the first recording layer 8 is the phase change-type recording layer, and not performed when the first recording layer 8 is the playback only-type or write once type. In the crystallization step, a laser beam may be radiated to the amorphous recording layer 8 to crystallize the layer 8. Because the laser beam is radiated to the first recording layer 8 through the intermediate layer 9 in this embodiment, the first recording layer 8 is less damaged if compared with a case where the laser beam is directly radiated to the first recording layer 8. It should be noted that the crystallization step (Step S4a) is not necessarily performed after the intermediate layer making step (Step S3a). For instance, the crystallization step may be carried out after the bed layer making step (Step S32b in Figure 4B or S32c in Figure 4C) during Step S3a. Alternatively, the crystallization step may be carried out any time after the intermediate layer making step (Step S3a). For instance, the crystallization step may be conducted after the protection layer making step (Step S6a).

After Step S4a, the second recording layer 10 is formed at Step S5a. Step S5a is performed in a similar way to Step S2a. Specifically, the second recording layer 10 may be created by a film (layer) making method such as resistor-heating-type vacuum vapor deposition, electron-beam-type vacuum vapor deposition and sputtering, or spin coating. It should be noted that the second recording layer 10 may be a different type of recording layer than the first recording layer 8. For example, when the first recording layer 8 is the phase change type, the second recording layer 10 is a playback only type. The recording medium 6 having such first and second recording layers is called a hybrid type multi-layer recording medium.

The protection layer 11 is then formed on the second recording layer 10 (Step S6a). When the second recording layer 10 is the phase change type, the crystallization step is applied to the second recording layer 10 (Step S7a) to complete the formation of the second recording layer 10 after Step S6a. This crystallization step is similar to Step S4a.

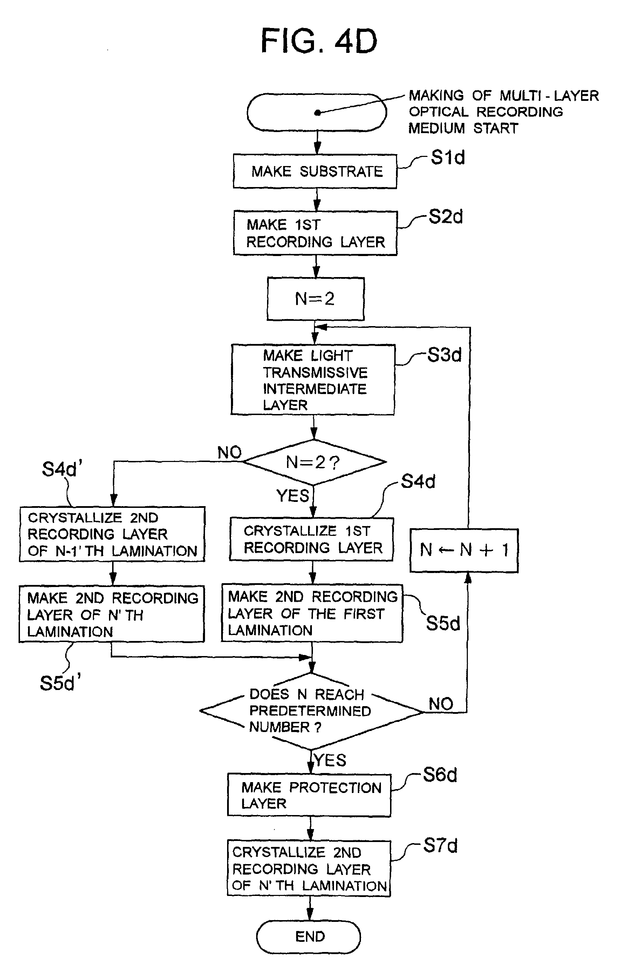

When the recording medium 6 includes more than two recording layers, the recording medium 6 is fabricated in accordance with the flowchart shown in Figure 4D. When the number of the recording layers is N + 1 (N is an integer greater than one), the substrate making step (Step S1d), the first recording layer making step (Step S2d), the intermediate layer making step (Step S3d), the first layer crystallizing step (Step S4d) and the second recording layer making step (Step S5d) are performed sequentially. Then, the intermediate layer making step (Step S3d), the second recording layer crystallizing step (Step S4d') and the third recording layer making step (Step S5d' ) are performed sequentially. Steps S3d, S4' and S5d' are repeated N times. After that, the protection layer is formed (Step S6d) and the N+1'th recording layer (last or uppermost recording layer) is crystallized (Step S7d). It should be noted that the second recording layer may be called "second recording layer of the first lamination", the third recording layer may be called "second recording layer of the second lamination", the fourth recording layer may be called "second recording layer of the third lamination and so on. Figure 4D employ these terms. The last recording layer is called "second recording layer of the Nth lamination" in Figure 4D. In this case, it can be said that the recording medium 6 has a single first recording layer 8 and a plurality of second layers 10, and a plurality of intermediate layers 9 are interposed between the first and second recording layers 8 and 10 when the first recording layer 8 lies below the second recording layer 10 and between two adjacent second recording layers 10 when a second recording layer 10 lies below another second recording layer 10.

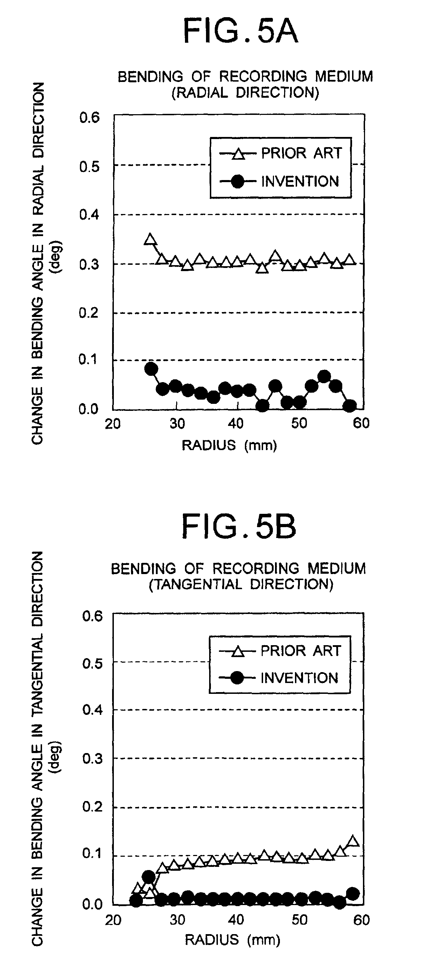

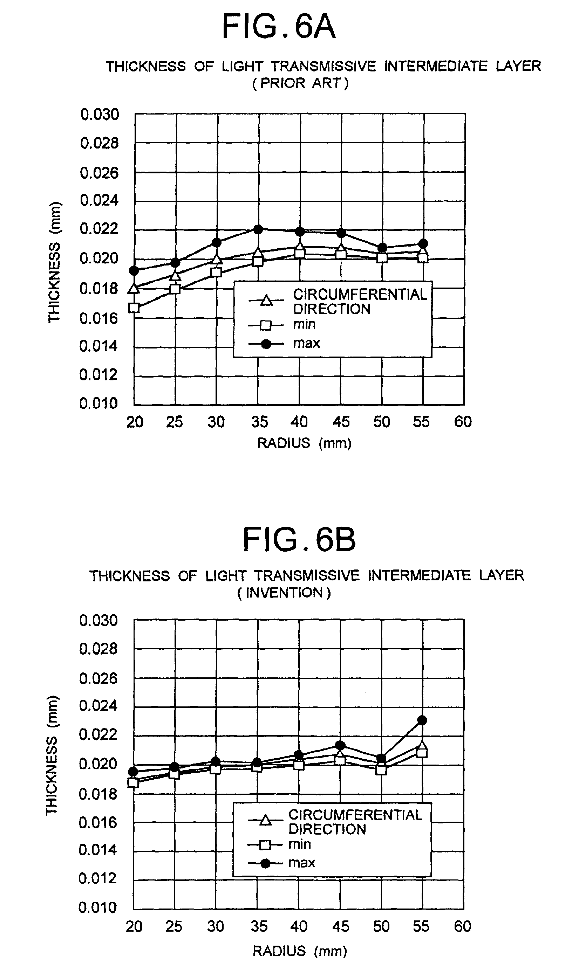

A multi-layer optical recording medium prepared in accordance with the embodiment of the invention was compared with a multi-layer optical recording medium prepared in accordance with a conventional method in terms of bending of the recording medium and thickness of the light transmissive intermediate layer. Figures 5A and 5B show the bending of the recording medium and Figures 6A and 6B show the thickness of the light transmissive intermediate layer when the recording medium had two recording layers. The desired (target) thickness of the intermediate layer was 20 microns. The intermediate layer of the recording medium according to the embodiment of the invention included three bed layers, each having 5-micron thickness, and one transcription layer having 5-micron thickness.

Figure 5A depicts the bending angle in the radial direction and Figure 5B depicts the bending angle in the tangential direction. As understood from these graphs, the recording medium of the invention has a smaller change in the bending angle across the whole radius of the recording medium than the recording medium of the prior art. Accordingly, the recording medium of the invention bends less than the recording medium of the prior art as a whole. In addition, the change in the bending angle in the tangential direction of the recording medium of the invention is independent of the radius of the recording medium. More specifically, the change in the bending angle in the tangential direction of the recording medium of the invention is constant and close to zero so that the recording medium has no local bending at certain radial locations, i.e., the recording medium is substantially planar. One reason for being able to obtain such flat recording medium is probably because the UV resin curing steps are repeatedly (accumulatedly; at least two curing steps (Steps S32b and S35b, or S32c and S38c)) performed to make the intermediate layer so that the resin is cured uniformly in the thickness direction of the recording medium, and the intermediate layer, as a whole, is less influenced by shrinkage upon curing of the resin.

Figure 6A illustrates the thickness of the light transmissive intermediate layer of the recording medium fabricated in accordance with the prior art method and Figure 6B illustrates the thickness of the light transmissive intermediate layer of the recording medium fabricated in accordance with the present invention method. It is obvious from these graphs that the average thickness of the intermediate layer in the circumferential direction is more uniform in the invention recording medium than the prior art recording medium across the radius of the recording medium, and a difference between the maximum thickness and minimum thickness of the intermediate layer in the circumferential direction is smaller in the invention recording medium than the prior art recording medium. Accordingly, it is understood that the recording medium of the invention has a uniform intermediate layer. One reason for being able to have such uniform intermediate layer is probably because the UV resin curing is performed repeatedly (accumulatedly; at least two curing steps (Steps S32b and S35b, or S32c and S38c)) so that the resin is uniformly cured in the thickness direction of the intermediate layer. Another reason is probably because the intermediate layer is less affected by the shape of the transparent stamper 4 when the thin transcription layer 14, which is the last layer of the intermediate layer made by the last curing step, is formed having grooves by the transparent stamper 4.

The features disclosed in the foregoing description, in the claims and/or in the accompanying drawings may, both separately and in any combination thereof, be material for realising the invention in diverse forms thereof.

## Claims

1. A method of making a recording medium having a substrate, a first recording layer located on the substrate, and at least one second recording layer stacked on the first recording layer, a light transmissive intermediate layer being interposed between the first and second recording layers when the first recording layer lying below the second recording layer and interposed between two adjacent second recording layers when one second recording layer lying below another second recording layer, the method comprising the steps of:
A) forming the first recording layer on the substrate;
B) forming the intermediate layer on the first recording layer by a plurality of laminating operations; and
C) forming the second recording layer on the intermediate layer.

2. The method according to claim 1 further including the steps:
D) forming another intermediate layer on the second recording layer by a plurality of laminating operations;
E) forming another second recording layer on the another intermediate layer formed in Step D; and
F) repeating Steps D and E until a desired number of second recording layers are formed.

3. The method according to claim 1, wherein a last laminating step of the plurality of laminating operations in Step B includes transcribing a recording surface of the second recording layer on a surface of the intermediate layer.

4. The method according to claim 2, wherein a last laminating step of the plurality of laminating operations in Step D includes transcribing a recording surface of the second recording layer on a surface of the another intermediate layer.

5. The method according to claim 1, wherein Step A forms the first recording layer of a phase change type, a write once type or a playback only type.

6. The method according to claim 2, wherein Step A forms the first recording layer of a phase change type, a write once type or a playback only type.

7. The method according to claim 1, wherein Step C forms the second recording layer of a phase change type, a write once type or a playback only type.

8. The method according to claim 7, wherein Step E forms the another second recording layer of a phase change type, a write once type or a playback only type.

9. The method according to claim 1, wherein Step B forms the light transmissive intermediate layer from a UV curing resin.

10. The method according to claim 9, wherein Step D forms the another light transmissive intermediate layer from a UV curing resin.

11. The method according to claim 1, wherein the first recording layer is a phase change type recording layer, and is crystallized during or after Step B.

12. The method according to claim 11, wherein the second recording layer is a phase change type recording layer, and is crystallized during or after Step D.

13. The method according to claim 12, wherein the another second recording layer formed in Step E is a phase change type recording layer, and is crystallized during or after Step D when Step D is repeated.

14. The method according to claim 1, wherein each of the plurality of laminating operations includes application of a resin and curing of the resin.

15. The method according to claim 2, wherein each of the plurality of laminating operations includes application of a resin and curing of the resin.

16. The method according to claim 3, wherein the last laminating step is performed using a stamper having a groove in Step B.

17. The method according to claim 4, wherein the last laminating step is performed using a stamper having a groove in Step D.
